# EUROPEAN PATENT APPLICATION

(11) **EP 1 482 744 A1**
(43) Date of publication of application: **01.12.2004**
(21) Application number: 03011174.4
(22) Date of filing: 27.05.2003
(51) Int. Cl.: H04Q 1/14

(54) **Terminal block for ADSL**

(71) Applicant: 3M Innovative Properties Company, St. Paul, Minnesota 55133-3427 (US)
(72) Inventor: Otto, Hans-Dieter, 51688 Wipperfürth (DE)
(74) Representative: HOFFMANN - EITLE

(57) **Abstract**

A telecommunications module has a housing with an interior and an exterior and plural contact elements (12, 40) extending from the interior to the exterior so as to enable the connection of exterior wires and/or the connection of interior or exterior electrical components and/or enable the tapping of contacts of another telecommunications module, wherein at last two of the contact elements (12, 14) are mutually connected within the interior of the housing by an internal wire (28, 32, 40, 42).

## Description

### Field of the Invention

The invention relates to a telecommunications module.

### Background

In telecommunication systems various types of modules are used in order to connect wires or electrical components with each other, e.g. connection modules are used in order to connect wires which eventually lead to the subscribers with one end of patch cables or jumper wires. These connection modules can be arranged in distributors, such as distribution frame or racks. The distributors also accommodate connection modules, at which wires that eventually lead to the switch of the telephone company, are connected with the other ends of the patch cables. The invention is, firstly, applicable to such connection modules.

Secondly, various types of protection modules or plugs are known that comprise protection elements and can be mounted to connection modules in a manner to tap the contacts of the connection module. By way of one or more surge arresters, which are arranged in the protection module, any equipment, which is connected with the wires terminated at the connection modules, can be protected from over-voltage or over-current. Those skilled in the art will, furthermore, be familiar with protection modules comprising over-voltage or over-current protectors, which are by way of tapping contacts of the protection module, suitably connected with the contacts of the connection module so as to protect the mentioned equipment from over-current.

Finally, there are connection modules known in the art that additionally comprise the above-mentioned protection components integrated in a housing of the connection module. In other words, the connection modules accommodate protection components, which by way of suitably designed contact elements, are electrically connected with those contacts, which are exposed outside the connection module in order to allow wires to be connected thereto. Particularly, in the latter described type of connection modules, the required contact elements can have extremely complicated shapes in order to realize the necessary electrical connections, taking into account the common shape of protection components as well as the necessity to replace those components after these have been activated. Finally, the shape of the contact elements can be further complicated due to the presence of separation points, at which two contact elements resiliently abut each other in a separable manner. In view of this structure, the contact elements can be electrically separated from each other by way of suitable devices, which can be inserted from outside in order to break the electrical connection and perform tests or similar actions.

German utility model DE 20002378 describes a protection module for telecommunications systems in which the contacts can, by way of a special arrangement of the protection components, be configured substantially flat.

### Summary of the Invention

The invention provides a telecommunications module, in which the contact elements can be designed very simple and cross-talk properties can be improved.
The novel telecommunications module can be of any type. In particular, reference is made to those types of telecommunications modules, which are mentioned in the introduction. Thus, the telecommunications module can be mountable to any type of carrier of any type of distributor and can be adapted to allow any type of wires, patch cables or jumper wires, to be connected therewith. Furthermore, the telecommunications module can have one or more separation points as well as electrical components, which are accommodated therein. The module can, in addition, be connected with other modules containing electrical components such as filters. Furthermore, one or more splitter circuits can be incorporated into the module in order to provide a so-called splitter module, which can be used in connection with ADSL-, or generally XDSL-technology, in order to split a combined signal into separate signals. Moreover, test and monitoring devices can be provided within or in connection with the module in order to allow testing and monitoring of lines, which are connected with the telecommunications module. Furthermore, the telecommunications module can be a module having contacts which are adapted to tap the contacts of a module, to which wires are connected. Such a module can accommodate electrical components such as protection elements and/or filters. The invention is applicable to any of the mentioned types of telecommunications modules as well as any other telecommunications modules which are known in the art.

The novel telecommunications module has, firstly, a housing with an interior and an exterior or an outside. The housing will typically be formed of insulating, particularly plastic material, and will on the outside be appropriately designed so as to fulfil certain functions. For example, there can be structures to allow the module to be mounted to a carrier. Furthermore, the housing can, on the outside, have suitable elements for guiding the wires or cables, which are connected to the contacts of the module. Moreover, in the case of a protection module, the housing will usually be adapted to be mounted to a connection module.

The telecommunications module, secondly, includes plural contact elements, which extend from the interior of the housing to the outside. In this context, it is sufficient if the contact elements are exposed so as to be accessible from the outside in order to allow for the contact elements to be used in any of the manners described below. In other words, it is possible, but not necessary, that the contact elements of the telecommunications module extend from the contour or outline of the housing. Rather, the required functions can be realized also if the contact elements are located within recesses or chambers formed in the housing so as to be exposed for the connection of wires. However, in particular in the case of the telecommunications module forming a protection module, the contact element can also extend from the outline of the housing.

The contact elements of the telecommunications module, which are at least accessible from the outside, are adapted to perform various functions depending on the type of telecommunications module. Firstly, particularly in the case of a connection module, exterior wires can be connected with the contact elements. For this purpose, the contact elements can be formed as insulation displacement contacts, wire wrap contacts or similar contacts in that part, which is exposed to the outside. Secondly, the contact elements can be adapted to allow the connection of interior or exterior electrical components with the contact elements, e.g. the contact elements can have end sections which are adapted to be electrically connected with electrical components, such as protection elements, filters, splitter circuits, and/or test or monitoring devices, within the housing of the telecommunications module. In particular, in the case of a protection module, these components can be accommodated entirely sealed within the interior of the housing. In the case of a connection module comprising replaceable electrical components, these components can be accessible from the outside. In such a case, those sections of the contact elements, which are adapted to be electrically connected with these components, can be considered to be exposed to the outside.

Thirdly, the contact elements of the telecommunications module can be adapted to tap the contacts of another telecommunications module. This will particularly be the case with protection modules, which comprise tapping contacts extending from the housing of the module so as to be inserted into a connection module and tap the contact thereof. By way of components such as surge arresters and/or over-current protectors, any equipment which is connected with wires terminated at the connection module, will be protected from over-voltage and/or over-current. As mentioned, the invention is well applicable to such a type of protection module.

In the telecommunications module, at least two of the contact elements are mutually connected within the interior of the housing by way of an internal wire. In other words, a flexible wire, which was previously merely known to be connected with such a module outside the housing, is used inside the housing of a telecommunications module in order to connect two contact elements of the telecommunications module. This measure significantly allows the structure of the contact elements to be simplified. As described in the introduction, it is necessary to provide relatively complicated contact elements in order to allow the formation of separation points and/or electrically connections with electrical components such as protection elements and/or filters.

In the novel telecommunications module, the contact elements can be simplified so as to constitute "functional contact elements". This means that a particular contact element performs a single or very few functions so as to allow the internal wire to perform further functions, e.g. in a connection module, simple, flat sheet metal pieces with an insulation displacement section can be used in order to allow the connection of external wires. In the interior of the telecommunications module, the contact element is connected with one end of the internal wire. The other end of the internal wire is connected with a further functional contact element, which can also be designed comparably simple as it merely needs to perform one further, preferably a single function, e.g. the further contact element can be adapted to allow the connections of outside wires or it can be electrically connected with a protection component.

By way of the novel internal wiring, the contact elements can be formed "specialized" for the specific function. This improves the specific properties of the contact elements. Furthermore, they can be kept simple because it is no longer necessary to form contact elements which are adapted to perform a first function on a first end and a second function at a second end. This requirement was commonly solved by relatively complicated contact elements. This can be eliminated by providing the internal wire for the necessary electrical connections between the "functional" contact elements which are "specialized" for the specific function to be performed at the particular end of the electrical path.

The use of an internal wire instead of connection sections of a contact element made of flat sheet metal also improves the cross talk properties. It has been found that these flat sheet metal sections form capacities, which particularly, in the case of high data rate transmissions, cause cross talk between adjacent contact elements. This requires the use of larger distances between adjacent contact elements and/or shielding devices, such as shielding plates between adjacent contact elements. By the use of an internal wire, the contact elements made of flat sheet metal can be formed comparably short, so that the resulting capacities can be remarkably reduced. Furthermore, the internal wire, particularly in the case of the use of a twisted pair, does not form a relevant capacity, so that cross talk between adjacent contact elements, each connected with further contact elements by an internal wire, can be remarkably reduced. In particular, the contact elements can be arranged with a very short distance between them so that the size of the novel telecommunications module can be reduced.

The telecommunications module can also comprise internal contact elements. Such internal contact elements can perform further connecting functions, similar to the internal wire and can, in certain applications, still be configured comparably simple. These internal contact elements can be mechanically connected with other contact elements, but electrically separated from the latter. Furthermore, the internal contact elements can be connected with the contact elements extending to the outside of the housing by, for example, soldering.

As mentioned, the contact elements of the telecommunications module can be formed entirely flat. This reduces production costs, as the contact element can be simply stamped from sheet metal. Naturally, the contact elements can also be formed as wire wrap contacts, or they can be constituted by the known LSA+-contacts, which can, moreover, be somewhat tilted or bent about their longitudinal axis.

Furthermore, the contact elements can comprise a single bend. Also with such a structure, the contact elements are configured comparably simple and can be produced with simple stamping and bending procedures, which merely require bending about one axis. By bending, the contact elements can be provided double-layered, i.e. with a part of the sheet metal being laid on top of another part. Subsequently, a contact slit of an insulation displacement section can be stamped from the contact element formed in this manner. Furthermore, by single bending, the contact elements can be provided with a flexible tab at one end so as to enable a reliable electrical connection with electrical components as desired.

As regards the structure of the contact elements, these can also comprise plural bendings about axes which are parallel to each other. Also such a contact element can be produced in a cost efficient manner, because the required bending operations are still relatively simple due to the bending axes being parallel to each other. With such a structure of the contact elements, specific requirements with regard to the functions to be performed, can be taken into account. However, with the described structure, the contact elements are still configured remarkably simpler than the known contact elements which are adapted to perform plural functions and require bendings about axes which are not parallel to each other.

The internal wire can be connected with the contact element by displacing the insulation of the wire. In other words, the contact element can comprise an insulation displacement section within the housing so as to allow a suitable electrical connection of the internal wire.

Furthermore, it is conceivable to connect the internal wire with the contact element by soldering or other methods.

In the telecommunications module, the cross-talk properties can be particularly improved when twisted wire pairs are used. As those skilled in the art will be well aware, the wires leading to the subscriber or the switch of telephone companies will usually be provided as wire pairs. The two wires of such a wire pair are connected with two contact elements, which can be called a pair of contact elements. The contact elements of such a pair are commonly called the a-contact and b-contact. As the same signal is transmitted via the contact elements of a pair, cross-talk between these contact elements does not occur. Therefore, the internal wires connected to the contact elements of such a pair can be arranged as close as possible to each other. Furthermore, cross talk with adjacent pairs of contact elements can be remarkably reduced if the internal wires, connected to the contact element of a pair, are twisted about each other. This effect has commonly only been used outside a telecommunications module. However, in the novel telecommunications module, the internal wiring can be performed by twisted wire pairs so as to achieve superior cross talk properties.

As regards the contact elements, these can be formed as insulation displacement contacts outside the housing of the telecommunications module. However, any other type of contact, such as wire wrap pins, is possible.

The electrical components, which can be accommodated in the telecommunications module, can be surge arresters, over-current or over-voltage protectors, filters, splitter circuits and/or components for testing and/or monitoring a line. Any other type of electrical components are conceivable in line with the specific requirements.

### Brief Description of the Drawings

In the following, an embodiment of the invention will be described in greater detail with reference to the enclosed drawings, in which:
Fig. 1 shows a side view of the contact elements and internal wires of a telecommunications module;
Fig. 2 shows a plan view of the arrangement of Fig. 1;
Fig. 3 shows a side view of a ground contact provided in the telecommunications module;
Fig. 4 shows a partially cutaway view of the telecommunications module;
Fig. 5 shows a detail of Fig. 4; and
Fig. 6 shows a sectional view of the telecommunications module of Fig. 4.

### Description of an Embodiment of the Invention

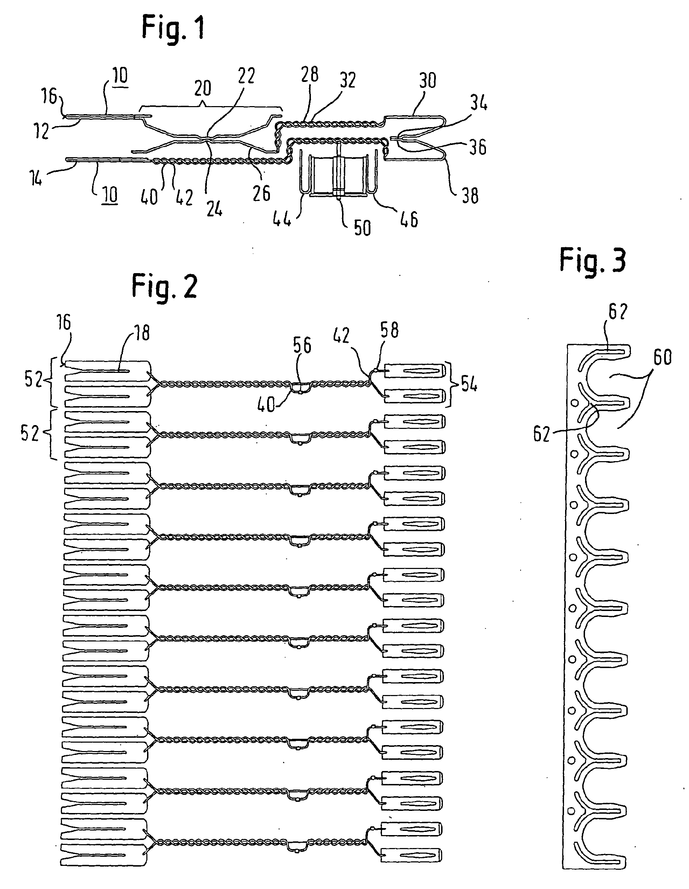

Fig. 1 shows, for the sake of clarity, only the interior of a telecommunications module. However, by the marks 10, it is indicated that first ends 16 of contact elements 12 and 14 extend outside the housing so as to allow the connection of external wires therewith. As can be taken from Fig. 2, the mentioned ends 16 of the contact elements comprise a suitable slit 18 which constitutes an insulation displacement section. In this section, external wires can be connected with the contact elements, e.g. wires, which eventually lead to the subscriber, can be connected with first contact elements 12, and jumper wires can be connected with second contact elements 14.

As can be taken from the right of Fig. 1, the interior of the telecommunications module comprises further contact elements which are adapted for the connection with electrical components, such as over-current protectors and/or surge arresters. As can, generally, also be taken from Fig. 1, the contact elements 12, 14 are, at least partly, connected with the internal contact elements by twisted wire pairs. These will be described in the course of the subsequent description of the electrical path between the first contact element 12 and the second contact element 14.

Firstly, the first contact element 12 is, in the insulation displacement section, formed double-layered by placing a part of the sheet metal, from which the contact element is formed, on another part of the same sheet metal. In the same manner, the second contact element 14, as a whole, is formed. The electrical path starts at the second contact element 14, where the signal comes in. On this occasion, it should be noted that the second contact element 14 is mechanically connected with an internal contact element 26, but electrically separated therefrom. The electrical path continues via internal wires 40 and 42 to internal contact elements 44 and 46. Each of these internal contact elements 44 and 46 taps one internal wire 40 and 42, respectively, so as to apply the voltage, which is present, to a (not shown) surge arrester. In the case of an over-voltage, the surge arrester will be activated and the current will be connected with the earth by a suitable contact 50. The arrangement of internal contact elements 44, 46 and the earth contact 50 is adapted for a surge arrester having three poles, with the ground or earth pole located at a centre portion so as to be connected with the ground contact 50.

Further along the electrical path, the internal wires 40 and 42 are connected with internal contact elements 38 each, one of each is visible in Fig. 1. Adjacent contact elements 38 as well as the mirror image, opposite internal contact elements each form a pair 54 (Fig. 2). As can also be seen in Fig. 2, adjacent contact elements of pairs 52 and 54 are connected with further contact elements by twisted wire pairs. The internal contact element 30, as well as the mirror image opposite internal contact element 38, are adapted to receive an (not shown) over-current protector.
The (not shown) housing of the telecommunications module can be configured so as to allow the insertion of the over-current protector from outside the housing between those sections 34 and 36 of the internal contact elements 30 and 38, which abut each other in the situation shown in Fig. 1.

However, when an over-current protector is inserted, the current will flow from the second contact element 14 via the internal wire 40 or 42 to the internal contact element 38, through the over-current protector to the internal contact element 30. Because of the fact that an over-current protector is located in the electrical path, this protector will be activated in the case of an over-current so that the electrical connection will be interrupted in order to prevent the over-current from damaging equipment which is connected with the telecommunications module.

The electrical path continues from the internal contact elements 30, which form a pair, via the twisted wire pair consisting of wires 28 and 32, to the internal contact element 26, which is mechanically, but not electrically, connected with the second contact element 14. In this context, it should be mentioned that the first contact element 12 comprises a second section 20 which has plural bendings about axes, which are parallel to each other and comprise a point 22 which forms a first side of a separation point. The second side of the separation point is formed by a corresponding point 24 of the internal contact element 26. As those skilled in the art will be well aware, the electrical connection between points 22 and 24 can be separated, e.g. for testing purposes, by a suitable separating device, which can be inserted from outside, typically from the left side according to Fig. 1.

In the shown, un-separated state, the electrical path continues, from the right part of the internal contact element 26 to point 22 of the first contact element 12.

As can be appreciated on the basis of Fig. 1, it is generally possible to design contact elements which perform both the functions of all contact elements shown in Fig. 1 and the functions of the connecting internal wires therebetween. However, such contact elements have a very complicated structure and require specific measures for enabling the connection with internal contact elements such as 44 and 46, shown in Fig. 1. By the internal wires 28, 32, 40 and 42, the contact elements can be kept comparably simple. In particular, they can be formed entirely flat and/or comprise a single bending, such as contact element 14. All of the other contact elements merely comprise bending about axes, which are parallel to each other. Finally, with the connection via twisted wire pairs, cross-talk properties can be significantly improved.

Fig. 2 shows the internal arrangement of the plural contact elements and the connections via twisted wire pairs there between in the plan view. The arrangement of Fig. 2 is applicable to a connection module, which is adapted to allow the connection of ten twisted wire pairs from outside, so that in total twenty first contact elements 12 and second contact element 14 each are required. As can be taken from Fig. 2, adjacent contact elements form pairs 52 of contact elements. The contact elements of such a pair 52 are connected with further pairs of contact elements, which are indicated by 54 in Fig. 2, by a twisted wire pair. This is possible due to the fact that cross-talk does not occur between contacts of one and the same pair. However, cross-talk between adjacent pairs 52, 54 can be significantly reduced by twisted wire pairs in the interior of the telecommunications module.

As those skilled in the art will realize, a surge arrester having three poles can be used to protect both electrical paths of a pair 52 from over-voltage. In Fig. 2, the connection point 56 between a first internal wire 40 and the connection point 58 with a second internal wire 42 is indicated. At these connection points, the internal contact elements 44 and 46 are connected with the respective internal wire 40 and 42.

The earth contact 50, which is not shown in Fig. 2, has the structure as shown in Fig. 3 so as to allow in total ten surge arresters, which are provided for the protection of ten contact pairs, to be connected with the ground in order to provide over-voltage protection. The ground contact 50 is generally formed as a flat strip of sheet metal, in which plural, approximately trough-shaped recesses 60 are formed so as to accommodate the centre part of a surge arrester having an approximately cylindrical shape. Suitable slits 62 are formed to provide the edges of the troughs 60 with flexibility in order to achieve a reliable electrical connection with the surge arresters.

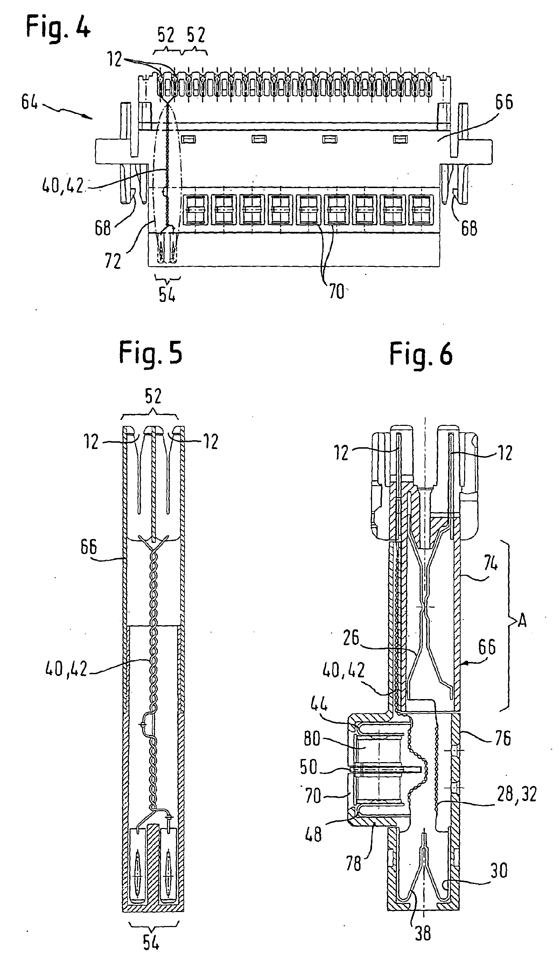

Fig. 4 shows a partially cutaway view of the telecommunications module 64. The telecommunications module 64 comprises a housing 66, usually of plastic material. In the case shown, the housing is provided, at each side thereof, with latching devices 68 or other suitable structures in order to allow the telecommunications module 64 to be mounted to a suitable carrier. Furthermore, the shown embodiment of a telecommunications module comprises in total ten chambers or compartments 70 for receiving surge arresters. These are, as described in more detail below, in contact with the contact elements of the telecommunications module. The telecommunications module 64 is, in the case shown, adapted to receive ten wire pairs at, in total, twenty contact elements 12. Two adjacent contact elements 12 form a pair 52. As can be seen in the cutaway part 72 of Fig. 4, and as shown in more detail in Fig. 2, the contact elements 12 of a particular pair 52 are connected with the contact elements of a further pair 54 by a twisted wire pair consisting of internal wires 40, 42. The arrangement shown in Fig. 4 essentially corresponds to that shown in Fig. 2 and described in detail above, so that a further detailed explanation does not appear to be necessary.

This also applies to Fig. 5. Fig. 5 essentially shows a pair 52 consisting of two contact elements 12 and connected with a further pair 54 of contact elements by the internal wires 40, 42. The arrangement corresponds to that shown in Fig. 2 with sections of the housing 66 of the telecommunications module 64 added. Fig. 5 clarifies how the contact elements 12 and the contact elements of the pair 54 are accommodated in the housing 66 in a reliable manner.

This can additionally be taken from Fig. 6. In the case shown, the housing 66 consists of a first, upper part 74, and a second, lower part 76. In the upper part 74, the contact elements 12 and the internal contact elements 26 (see also Fig. 1) are located. In the lower part 76, those internal contact elements 30 and 38, which are intended to contact an over current protector (not shown) are accommodated. Furthermore, the lower part 76 of the housing comprises, in the case shown, a projection 78, in which chambers 70 (see Fig. 4) for accommodating surge arresters 80 are formed. Furthermore, internal contact elements 44 and 48, which contact the surge arresters 80, the ground contact 50, and the internal wires 28, 32 as well as 40, 42 are located. As can be taken from the drawing, the upper part 74 and the lower part 76 of the housing overlap each other in a central region A.

## Claims

1. A telecommunications module having a housing with an interior and an exterior and plural contact elements (12, 14) extending from the interior to the exterior so as to enable the connection of exterior wires and/or the connection of interior or exterior electrical components therewith and/or enable the tapping of contact of another telecommunications module, wherein at least two of the contact elements (12, 14) are connected within the interior of the housing by an internal wire (28, 32, 40, 42).

2. A telecommunications module in accordance with claim 1 further comprising internal contact elements (26, 30, 38, 44, 48).

3. A telecommunications module in accordance with claim 1 or 2, wherein the contact elements (14) are flat.

4. A telecommunications module in accordance with one of the preceding claims, wherein the contact elements comprise a single bending (14, 44, 48).

5. A telecommunications module in accordance with one of claims 1 to 3, wherein the contact elements (12, 30, 38, 26) comprise plural bendings about axes which are parallel to each other.

6. A telecommunications module in accordance with one of the preceding claims, wherein the internal wire (28, 32, 40, 42) is connected with the contact elements (12, 26, 30, 38, 44, 48, 14) by displacing the insulation of the internal wire (28, 32, 40, 42).

7. A telecommunications module in accordance with any of the preceding claims, wherein the internal wire (28, 32, 40, 42) is connected with the contact elements (12, 26, 30, 38, 44, 48, 14) by soldering.

8. A telecommunications module in accordance with one of the preceding claims, wherein the contact elements (12, 14; 30, 38) are provided in pairs (52, 54), and the contact elements of a first pair (52) are connected with the contact elements of a second pair (54) via a twisted wire pair (28, 32; 40, 42).

9. A telecommunications module in accordance with one of the preceding claims, wherein the contact elements (12, 14) are formed as insulation displacement contacts outside the housing.

10. A telecommunications module in accordance with one of the preceding claims, wherein the electrical component is a surge arrester, an over-current or over-voltage protector, a filter, a splitter circuit and/or a component for testing and/or monitoring a line.
